# EUROPÄISCHE PATENTSCHRIFT

(11) **EP 3 182 484 B1**
(45) Veröffentlichungstag und Bekanntmachung des Hinweises auf die Patenterteilung: **03.04.2019**
(21) Anmeldenummer: 15200777.9
(22) Anmeldetag: 17.12.2015
(51) Int. Cl.: H01M 2/30, H01M 2/34, H01M 10/42, H01M 6/50, H01M 10/04, H01M 10/48

(54) **BATTERIEZELLE MIT EINEM BATTERIEZELLGEHÄUSE, IN DEM EIN ELEKTROCHEMISCHER TEIL UND EIN TRÄGER MIT WENIGSTENS EINEM SCHALTUNGSTEIL ANGEORDNET SIND, SOWIE HERSTELLUNGSVERFAHREN FÜR EINE SOLCHE BATTERIEZELLE**
BATTERY CELL HAVING A BATTERY CELL HOUSING CONTAINING AN ELECTROCHEMICAL COMPONENT AND A CARRIER WITH AT LEAST ONE CIRCUIT PART, AND METHOD OF MANUFACTURING SUCH A BATTERY CELL
ÉLEMENT DE BATTERIE COMPRENANT UN BOITIER D'ELEMENTS DE BATTERIE COMPRENANT UNE PARTIE ELECTROCHIMIQUE ET UN SUPPORT COMPRENANT AU MOINS UNE PARTIE DE COMMUTATION ET PROCEDE DE FABRICATION D'UN TEL ELEMENT DE BATTERIE

(43) Veröffentlichungstag der Anmeldung: 21.06.2017
(73) Patentinhaber: Lithium Energy and Power GmbH & Co. KG, 70469 Stuttgart (DE)
(72) Erfinder: Friedrich, Marco, 71638 Ludwigsburg (DE)
(74) Vertreter: Bee, Joachim

(56) Entgegenhaltungen:
- EP-A1- 1 507 306
- DE-A1-102010 043 710

## Beschreibung

Die vorliegende Erfindung betrifft eine Batteriezelle mit einem bevorzugt als gewickelten oder gestapelten Lagenaufbau ausgebildeten elektrochemischen Teil und ein Herstellungsverfahren für eine solche Batteriezelle.

### Stand der Technik

Aus dem Dokument US 2013/0149561 A1 ist eine Batteriezelle bekannt, die einen elektrochemischen Teil aufweist, der eine Jelly Roll mit zwei Elektroden umfasst. Ferner weist die Batteriezelle zwei von außerhalb der Batteriezelle kontaktierbare Batteriezellterminals auf, die jeweils mit einer der beiden Elektroden elektrisch verbunden sind. Weiterhin wird die Batteriezelle über ihre Batteriezellterminals mit einer Schutzschaltung elektrisch verbunden.

Aus dem Dokument US 2014/0017522 A1 ist eine Batteriezelle bekannt, die zwei von außerhalb der Batteriezelle kontaktierbare Batteriezellterminals aufweist. Dabei wird die Batteriezelle über ihre Batteriezellterminals mit einer Leiterplatte einer Schutzschaltung elektrisch verbunden. Die Schutzschaltung umfasst eine Leiterplatte mit mehreren elektronischen Bauelementen und zwei Schaltern.

Aus dem Dokument EP 1 507 306 A1 ist eine Batterie bekannt, die ein Batteriegehäuse und ein Kernstück mit einer positiven und einer negativen Elektrode umfasst. Das Batteriegehäuse umfasst ein Schutzmodul mit einer integrierten Schaltung und einem Feldeffekttransistor. Ein VDD-Ende der integrierten Schaltung fungiert als Fuß, der mit einem Anschluss und einem Ausgabeende der positiven Elektrode verbunden ist. Ein VSS-Ende der integrierten Schaltung fungiert als Fuß, der mit einem Anschluss der negativen Elektrode verbunden ist.

Aus dem Dokument DE 10 2010 043 710 A1 ist eine Batteriezelle bekannt, die eine elektrochemische Flachzelle mit randseitig davon abstehenden Anschlussfahnen und eine die Flachzelle umschließende Ummantelung aus Folienmaterial umfasst. Dabei ragen die Anschlussfahnen jeweils die Ummantelung durchsetzend aus der Ummantelung heraus. Ferner ist eine Überwachungselektronik in der Ummantelung angeordnet und elektrisch mit den Anschlussfahnen der Flachzelle verbunden.

### Offenbarung der Erfindung

Erfindungsgemäß wird eine Batteriezelle bereitgestellt, die ein Batteriezellgehäuse und einen in einem Behälter des Batteriezellgehäuses angeordneten und bevorzugt als gewickelten oder gestapelten Lagenaufbau ausgebildeten elektrochemischen Teil aufweist. Ein als gewickelten Lageaufbau ausgebildeter elektrochemischer Teil wird auch als Jelly Roll bezeichnet. Ein als gestapelten Lagenaufbau ausgebildeter elektrochemischer Teil wird auch als Stack bezeichnet. Dabei weist die Batteriezelle mindestens zwei an dem Batteriezellgehäuse angebrachte und von innerhalb und/oder außerhalb der Batteriezelle kontaktierbare Batteriezellterminals auf. Der Begriff Batteriezellterminal bezeichnet hierbei allgemein einen von innerhalb und/oder außerhalb der Batteriezelle kontaktierbaren elektrischen Anschluss der Batteriezelle, welcher beispielsweise als besonders ausgeformtes Element des Batteriezellgehäuses oder durch eine elektrisch leitfähige Oberfläche des Batteriezellgehäuses selbst ausgeführt sein kann. Ferner weist der elektrochemische Teil mindestens zwei Elektroden auf. Weiterhin weist die Batteriezelle einen bevorzugt als Leiterplatte ausgebildeten Träger auf, der in dem Batteriezellgehäuse angeordnet ist und wenigstens einen elektronischen Schaltungsteil aufweist. Der wenigstens eine Schaltungsteil umfasst bevorzugt wenigstens einen Leistungsschalter. Der wenigstens eine Leistungsschalter ist dazu ausgebildet, eine Elektrode der Elektroden mit jeweils einer anderen Elektrode der Elektroden zu verbinden. Alternativ oder zusätzlich ist der wenigstens eine Leistungsschalter jeweils dazu ausgebildet, eine Elektrode der Elektroden mit jeweils einem Batteriezellterminal der Batteriezellterminals zu verbinden. Anstelle einer Leiterplatte kann der Träger auch ein Substrat, eine Lochplatte, ein Halbleitergehäuse oder ein anderes geeignetes Element sein. Der elektrochemische Teil umfasst eine erste Kontaktfahne, die mit einer ersten Elektrode der Elektroden verbunden ist, und ein Kontaktelement. Dabei weist das Kontaktelement des elektrochemischen Teils eine zweite Kontaktfahne, die mit einer zweiten Elektrode der Elektroden verbunden ist, oder einen leitenden Bereich der zweiten Elektrode auf, der mit einem leitenden Bereich des Behälters verbunden ist. Der Träger umfasst eine erste Kontaktfahne, die mit der ersten Kontaktfahne des elektrochemischen Teils verbunden ist. Dabei umfasst der Träger bei Vorliegen der zweiten Kontaktfahne des elektrochemischen Teils eine zweite Kontaktfahne, die mit der zweiten Kontaktfahne des elektrochemischen Teils verbunden ist. Dabei ist mindestens eine Kontaktfahne des elektrochemischen Teils flächig ausgebildet. Ferner ist mindestens eine Kontaktfahne des Trägers flächig ausgebildet und jeweils in einem Randbereich des Trägers angeordnet. Weiterhin ist jede flächig ausgebildete Kontaktfahne derartig angeordnet, dass sich eine jede größte Seitenfläche dieser jeweils senkrecht zu einer Wicklungsebene des elektrochemischen Teils erstreckt. Dabei weist jede flächig ausgebildete Kontaktfahne des elektrochemischen Teils jeweils eine größte Seitenfläche auf, die eine größte Seitenfläche einer mit dieser direkt zu verbindenden und flächig ausgebildeten Kontaktfahne des Trägers überlappt. Auf diese Weise wird eine großflächige Verbindung zwischen mindestens einer Kontaktfahne des elektrochemischen Teils und mindestens einer Kontaktfahne des Trägers bereitgestellt, die eine gleichmäßige Stromverteilung gewährleistet, einen geringen Widerstand aufweist, mechanisch stabil ist und eine gute Ausnutzung eines batteriezellinternen Volumens einer entsprechenden Batteriezelle ermöglicht.

Die Unteransprüche zeigen bevorzugte Weiterbildungen der Erfindung.

Gemäß einer ersten bevorzugten Weiterbildung der Erfindung umfasst der wenigstens eine Schaltungsteil neben dem bevorzugt umfassten wenigstens einen Leistungsschalter mindestens ein weiteres elektronisches Bauelement. Mit anderen Worten kann der wenigstens eine Schaltungsteil den wenigstens einen Leistungsschalter und/oder das mindestens eine weitere elektronische Bauelement umfassen.

Bei einer zuvor beschriebenen Batteriezelle umfasst das mindestens eine weitere elektronische Bauelement bevorzugt mindestens ein Leistungselektronikelement, das bevorzugt wenigstens einen Leistungshalbleiter umfasst, und/oder mindestens ein Logikelement und/oder mindestens ein Sensorelement und/oder mindestens ein Steuerungselement und/oder mindestens ein erstes und/oder zweites Entladeelement. Das mindestens eine Sensorelement kann zumindest einen Teil einer Sensorik zum Überwachen der Batteriezelle bilden. Ferner können das mindestens eine erste Entladeelement zum Durchführen eines langsamen Entladens der Batteriezelle und/oder das mindestens eine zweite Entladeelement zum Durchführen eines schnellen Entladens der Batteriezelle ausgebildet sein. Wenigstens ein Entladeelement des mindestens einen ersten und/oder zweiten Entladeelements wird bevorzugt über den Behälter gekühlt und/oder umfasst bevorzugt einen Leistungshalbleiter.

Bei einer zuvor beschriebenen Batteriezelle bilden der wenigstens eine Leistungsschalter und/oder das mindestens eine weitere elektronische Bauelement bevorzugt eine Batteriezellelektronik der entsprechenden Batteriezelle aus.

Gemäß einer zweiten bevorzugten Weiterbildung der Erfindung, die mit der ersten Weiterbildung und/oder deren Ausgestaltungen kombiniert werden kann, ist der wenigstens eine Schaltungsteil mit der ersten Kontaktfahne des Trägers und/oder der zweiten Kontaktfahne des Trägers direkt verbunden. Alternativ ist der wenigstens eine Schaltungsteil mit der ersten Kontaktfahne des Trägers direkt verbunden und/oder mit dem leitenden Bereich des Behälters verbunden.

Bei einer zuvor beschriebenen Batteriezelle, bei der der leitende Bereich der zweiten Elektrode mit dem leitenden Bereich des Behälters verbunden ist, kann ein Verbinden des leitenden Bereichs der zweiten Elektrode mit dem leitenden Bereichs des Behälters bevorzugt über eine nicht isolierte Metallfolie erfolgen, die bevorzugt direkt mit dem Behälter verbunden ist.

Gemäß einer dritten bevorzugten Weiterbildung der Erfindung, die mit einer oder mehreren der zuvor beschriebenen bevorzugten Weiterbildungen und/oder deren Ausgestaltungen kombiniert werden kann, ist ein erstes Batteriezellterminal der Batteriezellterminals oder ein erstes Kontaktterminal des Trägers über mindestens einen ersten Leistungsschalter des wenigstens einen Schaltungsteils jeweils mit der ersten Kontaktfahne des Trägers verbunden. Das erste Kontaktterminal ist dabei mit dem ersten Batteriezellterminal verbunden oder bildet das erste Batteriezellterminal. Gemäß der dritten bevorzugten Weiterbildung ist das erste Batteriezellterminal oder das erste Kontaktterminal alternativ oder zusätzlich über mindestens einen zweiten Leistungsschalter des wenigstens einen Schaltungsteils jeweils mit der zweiten Kontaktfahne des Trägers oder mit dem leitenden Bereich des Behälters verbindbar. Gemäß der dritten bevorzugten Weiterbildung ist ferner ein zweites Batteriezellterminal der Batteriezellterminals oder ein zweites Kontaktterminal des Trägers mit der zweiten Kontaktfahne des Trägers verbunden. Das zweite Kontaktterminal ist dabei mit dem zweiten Batteriezellterminal verbunden oder bildet das zweite Batteriezellterminal. Gemäß der dritten bevorzugten Weiterbildung ist das zweite Batteriezellterminal oder das zweite Kontaktterminal alternativ mit dem leitenden Bereich des Behälters verbunden.

Bei einer zuvor beschriebenen Batteriezelle, bei der ein Kontaktterminal des Trägers mit einem Batteriezellterminal verbunden ist, kann ein Verbinden des jeweiligen Kontaktterminals mit dem jeweiligen Batteriezellterminal bevorzugt durch einen Presskontakt erfolgen. Bei einer zuvor beschriebenen Batteriezelle, bei der ein Kontaktterminal des Trägers ein Batteriezellterminal ausbildet, wird das jeweilige Batteriezellterminal bevorzugt direkt auf dem Träger aufgebracht, beispielsweise durch Einpressen oder Annieten.

Bei einer zuvor beschriebenen Batteriezelle ist jeder erste Leistungsschalter und/oder jeder zweite Leistungsschalter bevorzugt ein Feldeffekttransistor. Bei einer zuvor beschriebenen Batteriezelle sind der mindestens eine erste Leistungsschalter und der mindestens eine zweite Leistungsschalter bevorzugt in einer Halbbrückenkonfiguration angeordnet. Bei einer zuvor beschriebenen Batteriezelle kann der wenigstens eine Leistungsschalter neben dem mindestens einen ersten Leistungsschalter und dem mindestens einen zweiten Leistungsschalter mehrere weitere Leistungsschalter umfassen. In einem solchen Fall sind der mindestens eine erste Leistungsschalter, der mindestens eine zweite Leistungsschalter und die mehreren weiteren Leistungsschalter bevorzugt in einer Vollbrückenkonfiguration angeordnet.

Wenn der Träger mindestens eine Kontaktfahne aufweist, kann diese jeweils bevorzugt direkt mit dem Träger verbunden werden. Beispielsweise kann die mindestens eine Kontaktfahne des Trägers jeweils als angelötetes oder eingepresstes Kupferstück realisiert werden, das jeweils bevorzugt über Verschweißen, insbesondere über ultraschallbasiertes Verschweißen, mit der entsprechenden Kontaktfahne des elektrochemischen Teils verbunden werden kann.

Wenn der Träger die erste und die zweite Kontaktfahne aufweist, kann der wenigstens eine Schaltungsteil und bevorzugt auch das mindestens eine weitere elektronische Bauelement des wenigstens einen Schaltungsteils direkt mit den zwei Kontaktfahnen des Trägers verbunden werden. Dadurch kann eine einfach herzustellende, mechanisch sehr stabile, hochstromfähige und niederohmige Verbindung zwischen dem wenigstens einen Schaltungsteil, der bevorzugt die gesamte Batteriezellelektronik ausbildet, und dem elektrochemischen Teil bereitgestellt werden. Wenn der Träger nur die erste Kontaktfahne aufweist, kann der wenigstens eine Schaltungsteil und bevorzugt auch das mindestens eine weitere elektronische Bauelement einerseits direkt mit der ersten Kontaktfahne des Trägers verbunden werden und andererseits mit dem leitenden Bereich des Behälters verbunden werden. Dadurch können eine gute elektrische und gleichzeitig eine schwächere thermische Verbindung zwischen dem wenigstens einen Schaltungsteil und dem elektrochemischen Teil sowie eine gute thermische Verbindung zwischen dem wenigstens einen Schaltungsteil und dem Behälter beziehungsweise einer Außenumgebung einer entsprechenden Batteriezelle bereitgestellt werden.

Gemäß einer vierten bevorzugten Weiterbildung der Erfindung, die mit einer oder mehreren der zuvor beschriebenen bevorzugten Weiterbildungen, bevorzugt mit der dritten bevorzugten Weiterbildung, und/oder deren Ausgestaltungen kombiniert werden kann, sind der mindestens eine erste Leistungsschalter und/oder der mindestens eine zweite Leistungsschalter auf dem Träger angeordnet. Dabei sind der mindestens eine erste Leistungsschalter und/oder der mindestens eine zweite Leistungsschalter jeweils auf einer Seite der mit dem entsprechenden Leistungsschalter zu verbindenden Kontaktfahne des Trägers, die der anderen Kontaktfahne des Trägers zugewandt ist, angeordnet. Dabei grenzen ferner der mindestens eine erste Leistungsschalter und/oder der mindestens eine zweite Leistungsschalter jeweils an die mit dem entsprechenden Leistungsschalter zu verbindende Kontaktfahne des Trägers zumindest teilweise an. Gemäß der vierten bevorzugten Weiterbildung sind die zwei Kontaktfahnen des Trägers bevorzugt parallel zueinander angeordnet.

Gemäß einer fünften bevorzugten Weiterbildung der Erfindung, die mit einer oder mehreren der zuvor beschriebenen bevorzugten Weiterbildungen und/oder deren Ausgestaltungen kombiniert werden kann, ist das erste Kontaktterminal auf dem Träger in einem ersten Bereich angeordnet. Dabei ist der erste Bereich mit jeder Kontaktfahne des Trägers unmittelbar benachbart und erstreckt sich nicht zwischen den beiden Kontaktfahnen des Trägers. Bevorzugt sind gemäß der fünften bevorzugten Weiterbildung der mindestens eine erste Leistungsschalter und/oder der mindestens eine zweite Leistungsschalter jeweils auf dem Träger auf einer vordefinierten Seite des ersten Kontaktterminals angeordnet und grenzen an eine vordefinierte Seitenfläche des ersten Kontaktterminals an.

Gemäß einer sechsten bevorzugten Weiterbildung der Erfindung, die mit einer oder mehreren der zuvor beschriebenen bevorzugten Weiterbildungen und/oder deren Ausgestaltungen kombiniert werden kann, ist das erste Kontaktterminal auf dem Träger in einem zweiten Bereich angeordnet, der sich zwischen den beiden Kontaktfahnen des Trägers erstreckt. Bevorzugt ist dabei der mindestens eine erste Leistungsschalter jeweils auf dem Träger zwischen dem ersten Kontaktterminal und der ersten Kontaktfahne des Trägers angeordnet. Alternativ oder zusätzlich ist der mindestens eine zweite Leistungsschalter jeweils zwischen dem ersten Kontaktterminal und der zweiten Kontaktfahne des Trägers angeordnet. Gemäß der sechsten bevorzugten Weiterbildung grenzen ferner bevorzugt der mindestens eine erste Leistungsschalter und/oder der mindestens eine zweite Leistungsschalter jeweils an einer Seitenfläche des ersten Kontaktterminals an.

Gemäß einer siebten bevorzugten Weiterbildung der Erfindung, die mit einer oder mehreren der zuvor beschriebenen bevorzugten Weiterbildungen und/oder deren Ausgestaltungen kombiniert werden kann, sind der mindestens eine erste Leistungsschalter und/oder der mindestens eine zweite Leistungsschalter jeweils in einem dritten Bereich des Trägers angeordnet. Dabei grenzt der dritte Bereich an einen vordefinierten Bereich oder überlappt zumindest teilweise den vordefinierten Bereich. Dabei erstreckt sich der vordefinierte Bereich bezüglich einer vordefinierten Richtung unmittelbar unterhalb des ersten Batteriezellterminals oder des ersten Kontaktterminals. Die vordefinierte Richtung verläuft von dem ersten Batteriezellterminal oder von dem ersten Kontaktterminal zu einem Inneren des Behälters.

Gemäß einer achten bevorzugten Weiterbildung der Erfindung, die mit einer oder mehreren der zuvor beschriebenen bevorzugten Weiterbildungen und/oder deren Ausgestaltungen kombiniert werden kann, ist das zweite Kontaktterminal auf dem Träger auf einer Seite der zweiten Kontaktfahne des Trägers angeordnet, die der ersten Kontaktfahne des Trägers zugewandt ist. Dabei grenzt das zweite Kontaktterminal an die zweite Kontaktfahne des Trägers zumindest teilweise an.

Gemäß einer neunten bevorzugten Weiterbildung der Erfindung, die mit einer oder mehreren der zuvor beschriebenen bevorzugten Weiterbildungen und/oder deren Ausgestaltungen kombiniert werden kann, sind die Batteriezellterminals und der Träger derartig vorgesehen, dass eine Seitenfläche mindestens eines Batteriezellterminal jeweils eine Seitenfläche des mit diesem zu verbindenden Kontaktterminals überlappt.

Bei einer zuvor beschriebenen Batteriezelle, bei der mindestens eine Kontaktfahne des Trägers flächig ausgebildet ist, kann sich jede flächig ausgebildete Kontaktfahne des Trägers entlang einer ersten Richtung und/oder einer zweiten Richtung erstrecken. Die erste Richtung verläuft von dem Träger zu dem elektrochemischen Teil. Die zweite Richtung verläuft von dem Träger in einer der ersten Richtung entgegengesetzten Richtung.

Gemäß einer zehnten bevorzugten Weiterbildung der Erfindung, die mit einer oder mehreren der zuvor beschriebenen bevorzugten Weiterbildungen und/oder deren Ausgestaltungen kombiniert werden kann, ist der Träger flächig ausgebildet und derartig in dem Batteriezellgehäuse angeordnet, dass sich eine jede größte Seitenfläche dieser parallel zu einer Wicklungsebene des elektrochemischen Teils erstreckt.

Gemäß einer elften bevorzugten Weiterbildung der Erfindung, die mit einer oder mehreren der zuvor beschriebenen bevorzugten Weiterbildungen und/oder deren Ausgestaltungen kombiniert werden kann, umfasst das Batteriezellgehäuse den Deckel zum Abdecken des Behälters, wobei der elektrochemische Teil derartig in dem Behälter angeordnet ist, dass eine Wicklungsebene des elektrochemischen Teils parallel zu dem Deckel verläuft. Dabei ist der Träger zwischen dem Deckel und dem elektrochemischen Teil angeordnet oder in dem Deckel integriert.

Bei einer zuvor beschriebene Batteriezelle sind die Batteriezellterminals bevorzugt auf dem von dem Batteriezellgehäuse umfassten Deckel angeordnet.

Gemäß einer zwölften bevorzugten Weiterbildung der Erfindung, die mit einer oder mehreren der zuvor beschriebenen bevorzugten Weiterbildungen und/oder deren Ausgestaltungen kombiniert werden kann, umfasst der Behälter des Batteriezellgehäuses ein offenes Ende, eine Seitenwand und einen Boden, wobei der Boden parallel zu dem offenen Ende des Behälters verläuft und die Seitenwand an den Boden angrenzt. Gemäß der zwölften Weiterbildung ist der elektrochemische Teil derartig in dem Behälter angeordnet, dass eine Wicklungsebene des elektrochemischen Teils parallel zu der Seitenwand verläuft. Dabei ist der Träger zwischen der Seitenwand und dem elektrochemischen Teil angeordnet oder in der Seitenwand integriert. Alternativ ist der elektrochemische Teil derartig in dem Behälter angeordnet, dass eine Wicklungsebene des elektrochemischen Teils parallel zu dem Boden verläuft. Dabei ist der Träger zwischen dem Boden und dem elektrochemischen Teil angeordnet oder in dem Boden integriert.

In einem Fall, in dem der Träger zwischen der Seitenwand und dem elektrochemischen Teil angeordnet ist oder in der Seitenwand integriert ist, ist bevorzugt vorgesehen, dass die Batteriezellterminals auf dem Deckel angeordnet sind und der Träger keine Kontaktterminals aufweist. In diesem Fall ist ferner bevorzugt vorgesehen, dass der mindestens eine erste Leistungsschalter und der mindestens eine zweite Leistungsschalter in dem dritten Bereich, der teilweise den vordefinieren Bereich überlappt, angeordnet sind. In demselben Fall ist weiterhin bevorzugt vorgesehen, dass der elektrochemische Teil seine erste Kontaktfahne und sein den leitenden Bereich der zweiten Elektrode aufweisende Kontaktelement und der Träger nur seine erste Kontaktfahne umfasst. Folglich verläuft die vordefinierte Richtung bevorzugt von dem ersten Batteriezellterminal zu dem Inneren des Behälters und der vordefinierte Bereich erstreckt sich bezüglich der vordefinierten Richtung bevorzugt unmittelbar unterhalb des ersten Batteriezellterminals.

Vorteilhaft bei einer zuvor beschriebenen Batteriezelle, bei der der Träger in einem Teil des Behälters oder in dem Deckel integriert ist, ist, dass eine derartige Anordnung eine einfache Herstellung einer entsprechenden Batteriezelle und eine einfache Kühlung der Batteriezellelektronik ermöglicht. Dabei kann der Behälter oder der Deckel als Substrat beziehungsweise Trägermaterial des Trägers sowie als Kühlkörper für die Batteriezellelektronik dienen. Vorteilhaft bei einer zuvor beschriebenen Batteriezelle, bei der der Träger zwischen dem Deckel und dem elektrochemischen Teil oder in dem Deckel integriert ist, ist ferner, dass die Batteriezellelektronik zuerst mit dem elektrochemischen Teil und erst dann mit dem Behälter verbunden werden kann. Vorteilhaft bei einer zuvor beschriebenen Batteriezelle, bei der der Träger in dem Deckel integriert ist, ist weiterhin, dass der Deckel und der Träger einstückig als Deckelbaugruppe, das heißt, als einzelne Komponente, hergestellt werden kann.

Eine zuvor beschriebene Batteriezelle ist bevorzugt als prismenförmige Batteriezelle, Hartschalenbatteriezelle, Pouchbatteriezelle oder Rundbatteriezelle ausgebildet. Eine zuvor beschriebene Batteriezelle ist bevorzugt als gestapelte Batteriezelle ausgebildet.

Ein weiterer Aspekt der Erfindung betrifft ein Verfahren zum Herstellen einer zuvor beschriebenen Batteriezelle.

### Kurze Beschreibung der Zeichnungen

Nachfolgend werden Ausführungsbeispiele der Erfindung unter Bezugnahme auf die begleitende Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente oder der entsprechende Parameter wiederholt vorkommt, bezieht. In den Zeichnungen ist:
- Figur 1: eine stark schematisierte Teilexplosionsansicht einer Batteriezelle gemäß einer ersten Ausführungsform der Erfindung,
- Figur 2: eine Draufsicht eines als Leiterplatte ausgebildeten Trägers der Batteriezelle gemäß der ersten Ausführungsform der Erfindung,
- Figur 3: ein Ersatzschaltbild der Leiterplatte der Batteriezelle gemäß der ersten Ausführungsform der Erfindung,
- Figur 4: eine Teildraufsicht eines als Leiterplatte ausgebildeten Trägers einer Batteriezelle gemäß einer zweiten Ausführungsform der Erfindung,
- Figur 5: ein Ersatzschaltbild der Leiterplatte der Batteriezelle gemäß der zweiten Ausführungsform der Erfindung, und
- Figur 6: eine Seitenansicht eines als Leiterplatte ausgebildeten Trägers einer Batteriezelle gemäß einer dritten Ausführungsform der Erfindung.

### Ausführungsformen der Erfindung

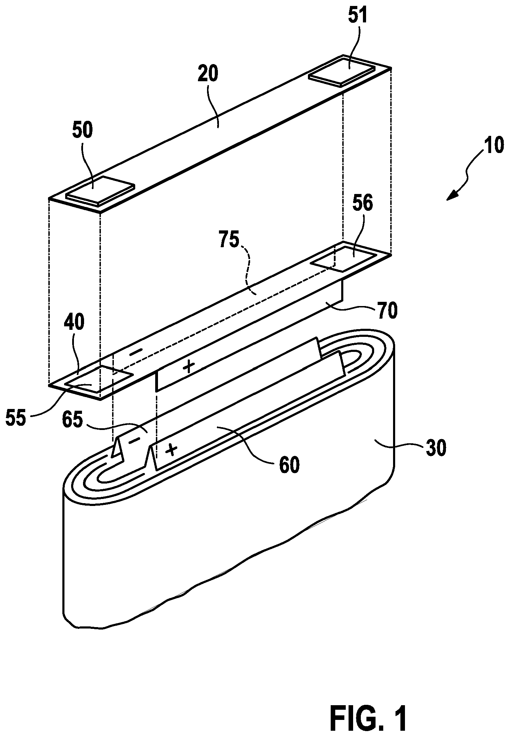

Figur 1 zeigt eine stark schematisierte Teilexplosionsansicht einer Batteriezelle 10 gemäß einer ersten Ausführungsform der Erfindung. Die Batterie 10 umfasst ein Batteriezellgehäuse, die einen Deckel 20 aufweist und einen in einem Behälter (nicht dargestellt) des Batteriezellgehäuses angeordneten und als Jelly Roll ausgebildeten elektrochemischen Teil 30. Der Deckel 20 ist dazu ausgebildet, den Behälter abzudecken. Eine Wicklungsebene des elektrochemischen Teils 30 verläuft parallel zu dem Deckel 20. In dem Batteriezellgehäuse ist ein Träger, der als eine flächig ausgebildete Leiterplatte 40 ausgebildet ist, zwischen dem Deckel 20 und dem elektrochemischen Teil 30 angeordnet. Die Leiterplatte 40 kann sich entlang der gesamten Länge der Batteriezelle 10 erstrecken. Dabei erstreckt sich eine jede größte Seitenfläche der Leiterplatte 40 parallel zu einer Wicklungsebene des elektrochemischen Teils 30. Auf dem Deckel 20 sind ein erstes Batteriezellterminal 50 und ein zweites Batteriezellterminal 51 angebracht. Auf der Leiterplatte 40 sind ein erstes Kontaktterminal 55, das mit dem ersten Batteriezellterminal 50 verbunden ist, und ein zweites Kontaktterminal 56 angebracht, das mit dem zweiten Batteriezellterminal 51 verbunden ist. Die zwei Batteriezellterminals 50, 51 sind von außerhalb der Batteriezelle 10 kontaktierbar. In einem alternativen Fall, kann die Leiterplatte 40 in dem Deckel 20 integriert sein, das heißt, dass der Deckel 20 und die Leiterplatte 40 eine einzelne Komponente ausbilden. In diesem alternativen Fall bilden das erste Kontaktterminal 55 der Leiterplatte 40 das erste Batteriezellterminal 50 und das zweite Kontaktterminal 56 der Leiterplatte 40 das zweite Batteriezellterminal 51.

Ferner umfasst der elektrochemische Teil 30 eine erste Elektrode, die mit einer ersten Kontaktfahne 60 verbunden ist, und eine zweite Elektrode, die mit einer zweiten Kontaktfahne 65 verbunden ist. Beispielsweise ist die erste Elektrode positiv und die zweite Elektrode negativ. Die Leiterplatte 40 umfasst eine erste Kontaktfahne 70, die mit der ersten Kontaktfahne 60 des elektrochemischen Teils 30 verbunden ist, und eine zweite Kontaktfahne 75, die mit der zweiten Kontaktfahne 65 des elektrochemischen Teils 30 verbunden ist. Jede Kontaktfahne 70, 75 der Leiterplatte 40 ist in einem Randbereich der Leiterplatte 40 angeordnet und erstreckt sich zumindest teilweise entlang einer Länge der Leiterplatte 40 und folglich der Länge der Batteriezelle 10. Ferner ist jede Kontaktfahne 60, 65, 70, 75 flächig ausgebildet. Dabei erstreckt sich eine jede größte Seitenfläche jeder Kontaktfahne 60, 65, 70, 75 jeweils senkrecht zu einer Wicklungsebene des elektrochemischen Teils 30. Ferner weist die erste Kontaktfahne 60 des elektrochemischen Teils 30 eine größte Seitenfläche auf, die eine größte Seitenfläche der ersten Kontaktfahne 70 der Leiterplatte 40 überlappt. Weiterhin weist die zweite Kontaktfahne 65 des elektrochemischen Teils 30 eine größte Seitenfläche auf, die eine größte Seitenfläche der zweiten Kontaktfahne 75 der Leiterplatte 40 überlappt.

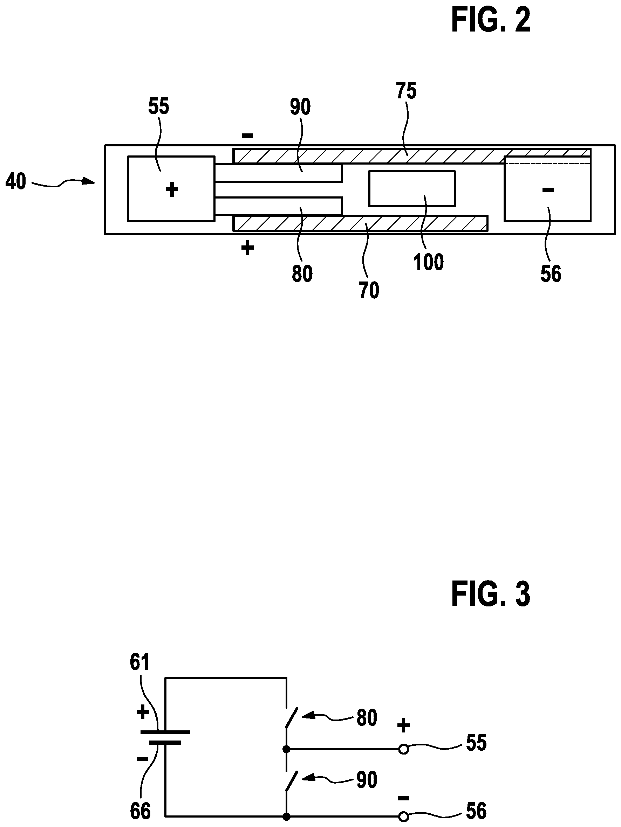

Figur 2 zeigt eine Draufsicht der Leiterplatte 40 der Batteriezelle 10 gemäß der ersten Ausführungsform der Erfindung. Darin sind die zwei parallel zueinander verlaufenden Kontaktfahnen 70, 75 der Leiterplatte 40, die zwei Kontaktterminals 55, 56, ein erster Leistungsschalter 80 und ein zweiter Leistungsschalter 90 erkennbar. Die erste Kontaktfahne 70 hat entlang der Länge der Leiterplatte 40 bevorzugt eine kürzere Ausdehnung als die zweite Kontaktfahne 75. Dabei ist das erste Kontaktterminal 55 über den ersten Leistungsschalter 80 mit der ersten Kontaktfahne 70 der Leiterplatte 40 und über den zweiten Leistungsschalter 90 mit der zweiten Kontaktfahne 75 der Leiterplatte 40 verbindbar. Dabei ist der erste Leistungsschalter 80 mit dem ersten Kontaktterminal 55 und der ersten Kontaktfahne 70 der Leiterplatte 40 jeweils direkt verbunden. Ferner ist der zweite Leistungsschalter 90 direkt mit dem ersten Kontaktterminal 55 und der zweiten Kontaktfahne 75 der Leiterplatte 40 jeweils direkt verbunden. Das zweite Kontaktterminal 56 ist mit der zweiten Kontaktfahne 75 der Leiterplatte 40 direkt verbunden.

Ferner ist das erste Kontaktterminal 55 auf der Leiterplatte 40 in einem ersten Bereich angeordnet, der mit jeder Kontaktfahne 70, 75 der Leiterplatte 40 unmittelbar benachbart ist und sich nicht zwischen den zwei Kontaktfahnen 70, 75 der Leiterplatte 40 erstreckt. Das zweite Kontaktterminal 56 ist auf einer Seite der zweiten Kontaktfahne 75 der Leiterplatte 40 angeordnet, die der ersten Kontaktfahne 70 der Leiterplatte 40 zugewandt ist und grenzt an der zweiten Kontaktfahne 75 der Leiterplatte 40 an. Weiterhin ist der erste Leistungsschalter 80 auf einer Seite der ersten Kontaktfahne 70 der Leiterplatte 40, die der zweiten Kontaktfahne 75 der Leiterplatte 40 zugewandt ist, angeordnet und grenzt an die erste Kontaktfahne 70 der Leiterplatte 40 teilweise an. Auch ist der zweite Leistungsschalter 90 auf der Seite der zweiten Kontaktfahne 75 der Leiterplatte 40, die der ersten Kontaktfahne 70 der Leiterplatte 40 zugewandt ist, angeordnet und grenzt an die zweite Kontaktfahne 75 der Leiterplatte 40 teilweise an. Des Weiteren sind der erste Leistungsschalter 80 und der zweite Leistungsschalter 90 jeweils auf der Leiterplatte 40 auf einer und derselben vordefinierten Seite des ersten Kontaktterminals 55 angeordnet. Ferner grenzen der erste Leistungsschalter 80 und der zweite Leistungsschalter 90 an eine vordefinierte Seitenfläche des ersten Kontaktterminals 55 an, die sich am nächsten zu den zwei Kontaktfahnen 70, 75 der Leiterplatte 40 befindet. Die Leiterplatte 40 umfasst bevorzugt mindestens ein weiteres elektronisches Bauelement 100. Ein Verbinden des mindestens einen weiteren elektronischen Bauelements 100 mit der ersten Elektrode beziehungsweise der zweiten Elektrode des elektrochemischen Teils 30 kann durch ein direktes Verbinden des mindestens einen weiteren elektronischen Bauelements 100 mit der ersten Kontaktfahne 70 beziehungsweise der zweiten Kontaktfahne 75 der Leiterplatte 40 und/oder durch Verbinden über einen elektrischen Lagenaufbau der Leiterplatte 40 erfolgen. Dabei kann das mindestens eine weitere elektronische Bauelement 100 auch Bauteile zum Entladen der Batteriezelle enthalten, welche direkt mit den beiden Kontaktterminals 55, 56 oder den beiden Kontaktfahnen 70, 75 verbunden sind.

Figur 3 zeigt ein Ersatzschaltbild der Leiterplatte 40. Darin sind die erste Elektrode 61 und die zweite Elektrode 66 des elektrochemischen Teils 30, die zwei Leistungsschalter 80, 90 und die zwei Kontaktterminals 55, 56 erkennbar. Beispielsweise ist die erste Elektrode 61 positiv und die zweite Elektrode 66 negativ. Aus der Figur 3 ist ersichtlich, dass die erste Elektrode 61 über den ersten Leistungsschalter 80 mit dem ersten Kontaktterminal 55 verbunden ist. Ferner ist die zweite Elektrode 66 über den zweiten Leistungsschalter 90 mit dem ersten Kontaktterminal 55 verbunden. Auch ist die zweite Elektrode 66 direkt mit dem zweiten Kontaktterminal 56 verbunden. Die zwei Leistungsschalter 80, 90 sind in einer Halbbrückenkonfiguration angeordnet.

In einem alternativen Fall kann die Leiterplatte 40 der Batteriezelle 10 gemäß der ersten Ausführungsform der Erfindung auch mehr als die zwei Leistungsschalter 80, 90 enthalten, welche beispielsweise eine Vollbrückenschaltung so realisieren, dass an jedem der Kontaktterminals 55, 56 jeweils zwei Leistungsschalter 80, 90 wie beschrieben angeordnet werden. Das bedeutet, dass in diesem Fall die Leiterplatte 40 neben den zwei Leistungsschaltern 80, 90 zwei weitere Leistungsschalter umfasst. Dabei sind die zwei weiteren Leistungsschalter in gleicher Weise gegenüber den zwei Kontaktfahnen 70, 75 der Leiterplatte 40 und dem zweiten Kontaktterminal 56 angeordnet, in der die zwei Leistungsschalter 80, 90 gegenüber den zwei Kontaktfahnen 70, 75 der Leiterplatte 40 und dem ersten Kontaktterminal 55 angeordnet sind. Ferner sind die zwei weiteren Leistungsschalter in gleicher Weise mit den zwei Kontaktfahnen 70, 75 der Leiterplatte 40 und dem zweiten Kontaktterminal 56 verbunden, in der die zwei Leistungsschalter 80, 90 mit den zwei Kontaktfahnen 70, 75 der Leiterplatte 40 und dem ersten Kontaktterminal 55 verbunden sind. Das bedeutet, dass in diesem Fall die erste Kontaktfahne 75 der Leiterplatte 40 über einen ersten der zwei weiteren Leistungsschalter auch mit dem zweiten Kontaktterminal 56 verbunden ist. Das bedeutet ferner, dass in diesem Fall die zweite Kontaktfahne 75 der Leiterplatte 40 nicht direkt sondern über einen zweiten der zwei weiteren Leistungsschalter mit dem zweiten Kontaktterminal 56 verbunden ist.

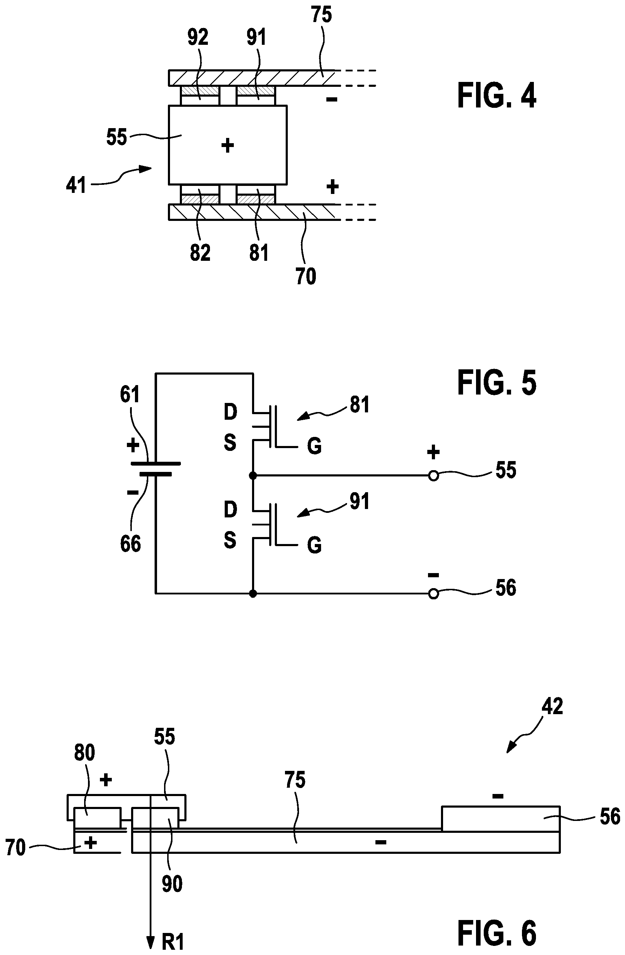

Figur 4 zeigt eine Teildraufsicht eines als Leiterplatte 41 ausgebildeten Trägers einer Batteriezelle gemäß einer zweiten Ausführungsform der Erfindung. Die Batteriezellen 10 gemäß der ersten und der zweiten Ausführungsform unterscheiden sich nur darin voneinander, dass bei der Batteriezelle gemäß der zweiten Ausführungsform die Leiterplatte 41 anders ausgebildet ist. Bei der Batteriezelle gemäß der zweiten Ausführungsform umfasst die Leiterplatte 41 einen ersten Leistungsschalter 81 und einen zweiten Leistungsschalter 91, die beispielsweise jeweils als ein Feldeffekttransistor ausgebildet sind. Ferner sind das erste Kontaktterminal 55 und die zwei Leistungsschalter 81, 91 anders auf der Leiterplatte 41 angeordnet. Bei den Batteriezellen 10 gemäß der ersten und der zweiten Ausführungsform sind die Leiterplatten 40, 41 sonst in gleicher Weise ausgebildet und die zwei Leistungsschalter 80, 90, 81, 91 in gleicher Weise verbunden.

Gemäß der zweiten Ausführungsform ist das erste Kontaktterminal 55 auf der Leiterplatte 41 in einem zweiten Bereich angeordnet, der sich zwischen den zwei Kontaktfahnen 70, 75 der Leiterplatte 41 erstreckt. Dabei ist der erste Leistungsschalter 81 auf der Leiterplatte 41 zwischen dem ersten Kontaktterminal 55 und der ersten Kontaktfahne 70 der Leiterplatte 41 angeordnet und grenzt an die erste Kontaktfahne 70 und an eine der ersten Kontaktfahne 70 zugewandten Seitenfläche des ersten Kontaktterminals 55 an. Ferner ist der zweite Leistungsschalter 91 zwischen dem ersten Kontaktterminal 55 und der zweiten Kontaktfahne 75 der Leiterplatte 40 angeordnet und grenzt an die zweite Kontaktfahne 75 und an eine der zweiten Kontaktfahne 75 zugewandten Seitenfläche des ersten Kontaktterminals 55 an.

Figur 5 zeigt ein Ersatzschaltbild der Leiterplatte 41 der Batteriezelle gemäß der zweiten Ausführungsform der Erfindung. Die Ersatzschaltbilder der Leiterplatten 40, 41 der Batteriezelle gemäß der ersten und der zweiten Ausführungsformen unterscheiden sich nur darin voneinander, das bei der Batteriezelle gemäß der zweiten Ausführungsform die zwei Leistungsschalter 81,91, jeweils als ein Feldeffekttransistor ausgebildet sind. Gemäß der zweiten Ausführungsform weist folglich jeder Leistungsschalter 81, 92 einen Drain Anschluss D, einen Source-Anschluss S und einen Gate-Anschuss G auf. Dabei ist der Drain-Anschluss D des ersten Leistungsschalters 81 mit der ersten Elektrode 61 des elektrochemischen Teils 30 und der Source-Anschluss S des ersten Leistungsschalters 81 mit dem ersten Kontaktterminal 55 verbunden. Ferner ist der Drain-Anschluss D des zweiten Leistungsschalters 91 mit dem ersten Kontaktterminal 55 und der Source-Anschluss S des zweiten Leistungsschalters 91 mit der zweiten Elektrode 66 des elektrochemischen Teils 30 verbunden. Auch die Leiterplatte 41 der Batteriezelle gemäß der zweiten Ausführungsform umfasst bevorzugt das mindestens eine weitere elektronische Bauelement, das auch Bauteile zum Entladen der Batteriezelle enthalten kann, welche direkt mit den beiden Kontaktterminals 55, 56 oder den beiden Kontaktfahnen 70, 75 verbunden sind.

In einem alternativen Fall kann die Leiterplatte 41 der Batteriezelle gemäß der zweiten Ausführungsform der Erfindung auch mindestens einen jeweils als Feldeffekttransistor ausgebildeten weiteren ersten Leistungsschalter 82 und mindestens einen jeweils als Feldeffekttransistor ausgebildeten weiteren zweiten Leistungsschalter 92 aufweisen. In diesem alternativen Fall ist der mindestens eine weitere erste Leistungsschalter 82 in gleicher Art und Weise wie der erste Leistungsschalter 81 und der mindestens eine weitere zweite Leistungsschalter 92 in gleicher Art und Weise wie der zweite Leistungsschalter 91 angeordnet und verbunden. Zur Vereinfachung der Darstellung werden in der Figur 4 nur ein weiterer erster Leistungsschalter 82 und nur ein weiterer zweiter Leistungsschalter 92 gezeigt.

In einem weiteren alternativen Fall kann die Leiterplatte 41 der Batteriezelle gemäß der zweiten Ausführungsform der Erfindung auch mehr als die zwei Leistungshalbleiter 81, 91 enthalten, welche beispielsweise eine Vollbrückenschaltung so realisieren, dass an jedem der Kontaktterminals 55, 56 jeweils zwei Leistungsschalter 81, 91 wie beschrieben angeordnet werden.

Figur 6 zeigt eine Seitenansicht eines als Leiterplatte 42 ausgebildeten Trägers einer Batteriezelle gemäß einer dritten Ausführungsform der Erfindung. Die Batteriezellen 10 gemäß der ersten und der dritten Ausführungsform unterscheiden sich nur darin voneinander, dass bei der Batteriezelle gemäß der dritten Ausführungsform die Leiterplatte 42 anders ausgebildet ist. Bei der Batteriezelle gemäß der dritten Ausführungsform sind das erste Kontaktterminal 55 und die zwei Leistungsschalter 80, 90 anders auf der Leiterplatte 42 angeordnet. Bei den Batteriezellen 10 gemäß der ersten und der dritten Ausführungsform sind die Leiterplatten 40, 42 sonst in gleicher Weise ausgebildet und die zwei Leistungsschalter 80, 90 in gleicher Weise verbunden.

Gemäß der dritten Ausführungsform der Erfindung sind die zwei Leistungsschalter 80, 90 jeweils in einem dritten Bereich der Leiterplatte 42 angeordnet. Der dritte Bereich stimmt mit einem vordefinierten Bereich überein, der sich bezüglich einer vordefinierten Richtung R1, die von dem ersten Kontaktterminal 55 zu dem Inneren des Behälters verläuft, unmittelbar unterhalb des ersten Kontaktterminals 55 erstreckt. In einem alternativen Fall, kann die zweite Elektrode 66 des elektrochemischen Teils an der Stelle der zweiten Kontaktfahne 65 einen leitenden Bereich aufweisen, der mit einem leitenden Bereich des Behälters, in dem der elektrochemischen Teil 30 angeordnet ist, verbunden ist. In diesem alternativen Fall weist sowohl der elektrochemische Teil 30 als auch die Leiterplatte 42 jeweils nur die erste Kontaktfahne 60, 70 auf. Die ersten Kontaktfahnen 60, 70 sind miteinander verbunden. Dabei ist der erste Leistungsschalter 80 mit dem ersten Kontaktterminal 55 und der ersten Kontaktfahne 70 der Leiterplatte 42 jeweils verbunden. Ferner sind der zweite Leistungsschalter 90 und das zweite Kontaktterminal 56 jeweils mit dem leitenden Bereich des Behälters und somit auch mit der zweiten Elektrode 66 des elektrochemischen Teils 30 verbunden. Auch die Leiterplatte 42 der Batteriezelle gemäß der dritten Ausführungsform umfasst bevorzugt das mindestens eine weitere elektronische Bauelement, das auch Bauteile zum Entladen der Batteriezelle enthalten kann, welche in diesem alternativen Fall direkt mit den beiden Kontaktterminals 55, 56 und/oder der Kontaktfahne 70 und/oder dem leitenden Bereich des Behälters verbunden sind.

Neben der voranstehenden schriftlichen Offenbarung wird hiermit zur weiteren Offenbarung der Erfindung ergänzend auf die Darstellung in den Figuren 1 bis 6 Bezug genommen.

## Patentansprüche

1. Batteriezelle (10) mit einem Batteriezellgehäuse und einem in einem Behälter des Batteriezellgehäuses angeordneten elektrochemischen Teil (30), wobei die Batteriezelle (10) mindestens zwei an dem Batteriezellgehäuse angebrachte und von innerhalb und/oder außerhalb der Batteriezelle (10) kontaktierbare Batteriezellterminals (50, 51) und der elektrochemische Teil (30) mindestens zwei Elektroden (61, 66) aufweist, wobei die Batteriezelle ferner einen Träger (40; 41; 42) umfasst, der in dem Batteriezellgehäuse angeordnet ist und wenigstens einen elektronischen Schaltungsteil (80, 90; 81, 82, 91, 92, 100) aufweist, wobei der elektrochemische Teil (30) eine erste Kontaktfahne (60), die mit einer ersten Elektrode (61) der Elektroden (61, 66) verbunden ist, und ein Kontaktelement umfasst, das eine zweite Kontaktfahne (65), die mit einer zweiten Elektrode (66) der Elektroden (61, 66) verbunden ist, oder einen leitenden Bereich der zweiten Elektrode (66) aufweist, der mit einem leitenden Bereich des Behälters verbunden ist, und der Träger (40; 41; 42) eine erste Kontaktfahne (70), die mit der ersten Kontaktfahne (60) des elektrochemischen Teil verbunden ist, und bei Vorliegen der zweiten Kontaktfahne (65) des elektrochemischen Teils (30) eine zweite Kontaktfahne (75) umfasst, die mit der zweiten Kontaktfahne (65) des elektrochemischen Teil (30) verbunden ist,
**dadurch gekennzeichnet, dass**
der elektrochemische Teil (30) als gewickelter Lagenaufbau ausgebildet ist und mindestens eine Kontaktfahne (60, 65) der ersten und/oder der zweiten Kontaktfahne (60, 65) des elektrochemischen Teils (30) flächig ausgebildet ist und mindestens eine Kontaktfahne (70, 75) der ersten und/oder der zweiten Kontaktfahne (70, 75) des Trägers (40; 41; 42) flächig ausgebildet ist und jeweils in einem Randbereich des Trägers (40; 41; 42) angeordnet ist,
wobei jede flächig ausgebildete Kontaktfahne (60, 65, 70, 75) derartig angeordnet ist, dass sich eine jede größte Seitenfläche dieser jeweils senkrecht zu einer Wicklungsebene des elektrochemischen Teils (30) erstreckt, wobei jede flächig ausgebildete Kontaktfahne (60, 65) des elektrochemischen Teils (30) jeweils eine größte Seitenfläche aufweist, die eine größte Seitenfläche einer mit dieser direkt zu verbindenden und flächig ausgebildeten Kontaktfahne (70, 75) des Trägers (40; 41; 42) überlappt.

2. Batteriezelle (10) nach Anspruch 1, **dadurch gekennzeichnet, dass** der wenigstens eine Schaltungsteil (80, 90; 81, 82, 91, 92, 100) wenigstens einen Leistungsschalter (80, 90; 81, 82, 91, 92) und/oder mindestens ein weiteres elektronisches Bauelement (100) umfasst, wobei der wenigstens eine Leistungsschalter (80, 90; 81, 82, 91, 92) dazu ausgebildet ist, eine Elektrode (61, 66) der Elektroden (61, 66) mit jeweils einer anderen Elektrode (61, 66) der Elektroden (61, 66) zu verbinden, und/oder der wenigstens eine Leistungsschalter (80, 90; 81, 82, 91, 92) jeweils dazu ausgebildet ist, eine Elektrode (61, 66) der Elektroden (61, 66) mit jeweils einem Batteriezellterminal (50, 51) der Batteriezellterminals (50, 51) zu verbinden.

3. Batteriezelle (10) nach einem der vorangehenden Ansprüche, **dadurch gekennzeichnet, dass** der wenigstens eine Schaltungsteil (80, 90; 81, 82, 91, 92, 100) mit der ersten Kontaktfahne (70) des Trägers (40; 41; 42) und/oder der zweiten Kontaktfahne (75) des Trägers (40; 41; 42) direkt verbunden ist oder der wenigstens eine Schaltungsteil (80, 90; 81, 82, 91, 92, 100) mit der ersten Kontaktfahne (70) des Trägers (40; 41; 42) direkt verbunden und/oder mit dem leitenden Bereich des Behälters verbunden ist.

4. Batteriezelle (10) nach einem der vorangehenden Ansprüche, **dadurch gekennzeichnet, dass** ein erstes Batteriezellterminal (50) der Batteriezellterminals (50, 51) oder ein erstes Kontaktterminal (55) des Trägers (40; 41; 42), das mit dem ersten Batteriezellterminal (50) verbunden ist oder das erste Batteriezellterminal (50) bildet, über mindestens einen ersten Leistungsschalter (80; 81, 82) des wenigstens einen Schaltungsteils (80, 90; 81, 82, 91, 92, 100) jeweils mit der ersten Kontaktfahne (70) des Trägers (40; 41; 42) und/oder über mindestens einen zweiten Leistungsschalter (90; 91, 92) des wenigstens einen Schaltungsteils (80, 90; 81, 82, 91, 92, 100) jeweils mit der zweiten Kontaktfahne (75) des Trägers (40; 41; 42) oder mit dem leitenden Bereich des Behälters verbindbar ist, wobei ein zweites Batteriezellterminal (51) der Batteriezellterminals (50, 51) oder ein zweites Kontaktterminal (56) des Trägers (40; 41; 42), das mit dem zweiten Batteriezellterminal (51) verbunden ist oder das zweite Batteriezellterminal (51) bildet, mit der zweiten Kontaktfahne (75) des Trägeres (40; 41; 42) oder mit dem leitenden Bereich des Behälters verbunden ist.

5. Batteriezelle (10) nach Anspruch 4, **dadurch gekennzeichnet, dass** der mindestens eine erste Leistungsschalter (80; 81, 82) und/oder der mindestens eine zweite Leistungsschalter (90; 91, 92) auf dem Träger (40; 41; 42) jeweils auf einer Seite der mit dem entsprechenden Leistungsschalter (80, 90; 81, 82, 91, 92) zu verbindenden Kontaktfahne (70, 75) des Trägers (40; 41; 42), die der anderen Kontaktfahne (70, 75) des Trägers (40; 41; 42) zugewandt ist, angeordnet sind und jeweils an die mit dem entsprechenden Leistungsschalter (80, 90; 81, 82, 91, 92) zu verbindende Kontaktfahne (70, 75) des Trägers (40; 41; 42) zumindest teilweise angrenzen, wobei die zwei Kontaktfahnen (70; 75) auf dem Träger (40; 41; 42) parallel zueinander angeordnet sind.

6. Batteriezelle (10) nach einem der Ansprüche 4 oder 5, **dadurch gekennzeichnet, dass** das erste Kontaktterminal (55) auf dem Träger (40) in einem ersten Bereich angeordnet ist, der mit jeder Kontaktfahne (70, 75) des Trägers (40) unmittelbar benachbart ist und sich nicht zwischen den beiden Kontaktfahnen (70, 75) des Trägers (40) erstreckt, wobei der mindestens eine erste Leistungsschalter (80) und/oder der mindestens eine zweite Leistungsschalter (90) jeweils auf dem Träger (40) auf einer vordefinierten Seite des ersten Kontaktterminals (55) angeordnet sind und an eine vordefinierte Seitenfläche des ersten Kontaktterminals (55) angrenzen.

7. Batteriezelle nach einem der Ansprüche 4 oder 5, **dadurch gekennzeichnet, dass** das erste Kontaktterminal (55) auf dem Träger (41) in einem zweiten Bereich angeordnet ist, der sich zwischen den beiden Kontaktfahnen (70, 75) des Trägers (41) erstreckt, wobei der mindestens eine erste Leistungsschalter (81, 82) jeweils auf dem Träger (41) zwischen dem ersten Kontaktterminal (55) und der ersten Kontaktfahne (70) des Trägers (41) angeordnet ist und/oder der mindestens eine zweite Leistungsschalter (91, 92) jeweils zwischen dem ersten Kontaktterminal (55) und der zweiten Kontaktfahne (75) des Trägers (41) angeordnet ist, wobei der mindestens eine erste Leistungsschalter (81, 82) und/oder der mindestens eine zweite Leistungsschalter (91, 92) jeweils an einer Seitenfläche des ersten Kontaktterminals (55) angrenzen.

8. Batteriezelle nach einem der Ansprüche 4 oder 5, **dadurch gekennzeichnet, dass** der mindestens eine erste Leistungsschalter (80) und/oder der mindestens eine zweite Leistungsschalter (90) jeweils in einem dritten Bereich des Trägers (42) angeordnet sind, der an einen vordefinierten Bereich unmittelbar angrenzt oder den vordefinierte Bereich zumindest teilweise überlappt, wobei sich der vordefinierte Bereich bezüglich einer vordefinierten Richtung (R1), die von dem ersten Batteriezellterminals (50) oder dem ersten Kontaktterminals (55) zu einem Inneren des Behälters verläuft, unmittelbar unterhalb des ersten Batteriezellterminals (50) oder des ersten Kontaktterminals (55) erstreckt.

9. Batteriezelle (10) nach einem der Ansprüche5 bis 8, **dadurch gekennzeichnet, dass** das zweite Kontaktterminal (56) auf dem Träger (40; 41; 42) auf einer Seite der zweiten Kontaktfahne (75) des Trägers (40; 41; 42), die der ersten Kontaktfahne (70) des Trägers (40; 41; 42) zugewandt ist, angeordnet ist und an die zweite Kontaktfahne (75) des Trägers (40; 41; 42) zumindest teilweise angrenzt

10. Batteriezelle (10) nach einem der Ansprüche 4 bis 9, **dadurch gekennzeichnet, dass** die Batteriezellterminals (50, 51) und der Träger (40; 41; 42) derartig vorgesehen sind, dass eine Seitenfläche mindestens eines Batteriezellterminals (50, 51) jeweils eine Seitenfläche des mit diesem zu verbindenden Kontaktterminals (55, 56) überlappt.

11. Batteriezelle (10) nach einem der vorangehenden Ansprüche, **dadurch gekennzeichnet, dass** der Träger (40; 41; 42) flächig ausgebildet und derartig in dem Batteriezellgehäuse angeordnet ist, dass sich eine jede größte Seitenfläche dieses parallel zu einer Wicklungsebene des elektrochemischen Teils (30) erstreckt.

12. Batteriezelle (10) nach einem der vorangehenden Ansprüche, **dadurch gekennzeichnet, dass** das Batteriezellgehäuse ein Deckel (20) zum Abdecken des Behälters umfasst, wobei der elektrochemische Teil (30) derartig in dem Behälter angeordnet ist, dass eine Wicklungsebene des elektrochemischen Teils (30) parallel zu dem Deckel (20) verläuft, und der Träger (40; 41; 42) zwischen dem Deckel (20) und dem elektrochemischen Teil (30) angeordnet oder in dem Deckel (20) integriert ist.

13. Verfahren zum Herstellen einer Batteriezelle (10) nach einem der vorangehenden Ansprüche.

## Claims

1. Battery cell (10) having a battery cell housing and an electrochemical part (30) arranged in a casing of the battery cell housing, wherein the battery cell (10) has at least two battery cell terminals (50, 51), which are mounted on the battery cell housing and can be contacted from inside and/or outside of the battery cell (10), and the electrochemical part (30) has at least two electrodes (61, 66), wherein the battery cell also comprises a carrier (40; 41; 42), which is arranged in the battery cell housing and has at least one electronic circuit part (80, 90; 81, 82, 91, 92, 100), wherein the electrochemical part (30) comprises a first contact lug (60), which is connected to a first electrode (61) of the electrodes (61, 66), and a contact element, which has a second contact lug (65), which is connected to a second electrode (66) of the electrodes (61, 66), or a conductive region of the second electrode (66), which is connected to a conductive region of the casing, and the carrier (40; 41; 42) comprises a first contact lug (70), which is connected to the first contact lug (60) of the electrochemical part, and, in the presence of the second contact lug (65) of the electrochemical part (30), comprises a second contact lug (75), which is connected to the second contact lug (65) of the electrochemical part (30),
**characterized in that**
the electrochemical part (30) is formed as a wound layer structure and
at least one contact lug (60, 65) of the first and/or the second contact lug (60, 65) of the electrochemical part (30) is of flat design and at least one contact lug (70, 75) of the first and/or the second contact lug (70, 75) of the carrier (40; 41; 42) is of flat design and is arranged in a respective edge region of the carrier (40; 41; 42),
wherein each flat contact lug (60, 65, 70, 75) is arranged in such a way that each greatest side surface thereof extends in each case perpendicularly to a winding plane of the electrochemical part (30), wherein each flat contact lug (60, 65) of the electrochemical part (30) has a respective greatest side surface that overlaps a greatest side surface of a flat contact lug (70, 75) of the carrier (40; 41; 42), which contact lug is to be connected directly to said side surface.

2. Battery cell (10) according to Claim 1, **characterized in that** the at least one circuit part (80, 90; 81, 82, 91, 92, 100) comprises at least one circuit breaker (80, 90; 81, 82, 91, 92) and/or at least one further electronic component (100), wherein the at least one circuit breaker (80, 90; 81, 82, 91, 92) is designed to connect one electrode (61, 66) of the electrodes (61, 66) to a respective other electrode (61, 66) of the electrodes (61, 66), and/or the at least one circuit breaker (80, 90; 81, 82, 91, 92) is designed in each case to connect one electrode (61, 66) of the electrodes (61, 66) to a respective battery cell terminal (50, 51) of the battery cell terminals (50, 51).

3. Battery cell (10) according to either of the preceding claims, **characterized in that** the at least one circuit part (80, 90; 81, 82, 91, 92, 100) is connected directly to the first contact lug (70) of the carrier (40; 41; 42) and/or to the second contact lug (75) of the carrier (40; 41; 42) or the at least one circuit part (80, 90; 81, 82, 91, 92, 100) is connected directly to the first contact lug (70) of the carrier (40; 41; 42) and/or connected to the conductive region of the casing.

4. Battery cell (10) according to one of the preceding claims, **characterized in that** a first battery cell terminal (50) of the battery cell terminals (50, 51) or a first contact terminal (55) of the carrier (40; 41; 42), which is connected to the first battery cell terminal (50) or forms the first battery cell terminal (50), can be connected in each case to the first contact lug (70) of the carrier (40; 41; 42) by means of at least one first circuit breaker (80; 81, 82) of the at least one circuit part (80, 90; 81, 82, 91, 92, 100) and/or can be connected in each case to the second contact lug (75) of the carrier (40; 41; 42) or to the conductive region of the casing by means of at least one second circuit breaker (90; 91, 92) of the at least one circuit part (80, 90; 81, 82, 91, 92, 100), wherein a second battery cell terminal (51) of the battery cell terminals (50, 51) or a second contact terminal (56) of the carrier (40; 41; 42), which is connected to the second battery cell terminal (51) or forms the second battery cell terminal (51), is connected to the second contact lug (75) of the carrier (40; 41; 42) or to the conductive region of the casing.

5. Battery cell (10) according to Claim 4, **characterized in that** the at least one first circuit breaker (80; 81, 82) and/or the at least one second circuit breaker (90; 91, 92) are arranged on the carrier (40; 41; 42) on a respective side of the contact lug (70, 75) of the carrier (40; 41; 42), which contact lug is to be connected to the corresponding circuit breaker (80, 90; 81, 82, 91, 92), which side faces towards the other contact lug (70, 75) of the carrier (40; 41; 42), and each at least partly adjoin the contact lug (70, 75) of the carrier (40; 41; 42), which contact lug is to be connected to the corresponding circuit breaker (80, 90; 81, 82, 91, 92), wherein the two contact lugs (70, 75) are arranged on the carrier (40; 41; 42) in parallel with one another.

6. Battery cell (10) according to either of Claims 4 and 5, **characterized in that** the first contact terminal (55) is arranged on the carrier (40) in a first region, which is immediately adjacent to each contact lug (70, 75) of the carrier (40) and does not extend between the two contact lugs (70, 75) of the carrier (40), wherein the at least one first circuit breaker (80) and/or the at least one second circuit breaker (90) are each arranged on the carrier (40) on a predefined side of the first contact terminal (55) and adjoin a predefined side surface of the first contact terminal (55).

7. Battery cell according to either of Claims 4 and 5, **characterized in that** the first contact terminal (55) is arranged on the carrier (41) in a second region, which extends between the two contact lugs (70, 75) of the carrier (41), wherein the at least one first circuit breaker (81, 82) is arranged in each case on the carrier (41) between the first contact terminal (55) and the first contact lug (70) of the carrier (41) and/or the at least one second circuit breaker (91, 92) is arranged in each case between the first contact terminal (55) and the second contact lug (75) of the carrier (41), wherein the at least one first circuit breaker (81, 82) and/or the at least one second circuit breaker (91, 92) each adjoin a side surface of the first contact terminal (55).

8. Battery cell according to either of Claims 4 and 5, **characterized in that** the at least one first circuit breaker (80) and/or the at least one second circuit breaker (90) are each arranged in a third region of the carrier (42), which third region directly adjoins a predefined region or at least partly overlaps the predefined region, wherein, with respect to a predefined direction (R1), which runs from the first battery cell terminal (50) or the first contact terminal (55) to an interior of the casing, the predefined region extends directly below the first battery cell terminal (50) or the first contact terminal (55).

9. Battery cell (10) according to one of Claims 5 to 8, **characterized in that** the second contact terminal (56) is arranged on the carrier (40; 41; 42) on a side of the second contact lug (75) of the carrier (40; 41; 42), which side faces towards the first contact lug (70) of the carrier (40; 41; 42), and at least partly adjoins the second contact lug (75) of the carrier (40; 41; 42).

10. Battery cell (10) according to one of Claims 4 to 9, **characterized in that** the battery cell terminals (50, 51) and the carrier (40; 41; 42) are provided in such a way that a side surface of at least one battery cell terminal (50, 51) in each case overlaps a side surface of the contact terminal (55, 56) to be connected to said battery cell terminal.

11. Battery cell (10) according to one of the preceding claims, **characterized in that** the carrier (40; 41; 42) is of flat design and is arranged in the battery cell housing in such a way that each greatest side surface thereof extends parallel to a winding plane of the electrochemical part (30).

12. Battery cell (10) according to one of the preceding claims, **characterized in that** the battery cell housing comprises a cover (20) for covering the casing, wherein the electrochemical part (30) is arranged in the casing in such a way that a winding plane of the electrochemical part (30) runs parallel to the cover (20), and the carrier (40; 41; 42) is arranged between the cover (20) and the electrochemical part (30) or is integrated in the cover (20) .

13. Method for producing a battery cell (10) according to one of the preceding claims.

## Revendications

1. Élément de batterie (10) comprenant un boîtier d'élément de batterie et un élément électrochimique (30) disposé dans un récipient du boîtier d'élément de batterie, dans lequel l'élément de batterie (10) comporte au moins deux bornes d'éléments de batterie (50, 51) qui sont fixées au boîtier d'élément de batterie et peuvent être mises en contact de l'intérieur et/ou de l'extérieur de l'élément de batterie (10), et la partie électrochimique (30) comporte au moins deux électrodes (61, 66), dans lequel l'élément de batterie comprend en outre un support (40 ; 41 ; 42) qui est disposé dans le boîtier d'élément de batterie et comporte au moins une partie formant circuit électronique (80, 90 ; 81, 82, 91, 92, 100), dans lequel la partie électrochimique (30) comprend une première patte de contact (60) qui est connectée à une première électrode (61) des électrodes (61, 66) et un élément de contact qui comporte une deuxième patte de contact (65) connectée à une deuxième électrode (66) des électrodes (61, 66) ou une zone conductrice de la deuxième électrode (66) connectée à une zone conductrice du récipient, et le support (40 ; 41 ; 42) comprend une première patte de contact (70) qui est connectée à la première patte de contact (60) de la partie électrochimique et, en présence de la deuxième patte de contact (65) de la partie électrochimique (30), une deuxième patte de contact (75) qui est connectée à la deuxième patte de contact (65) de la partie électrochimique (30),
**caractérisé en ce que** la partie électrochimique (30) est réalisée sous la forme d'une structure en couches enroulée et
au moins une patte de contact (60, 65) de la première et/ou de la deuxième patte de contact (60, 65) de la partie électrochimique (30) est réalisée de manière plane et au moins une patte de contact (70, 75) de la première et/ou de la deuxième patte de contact (70, 75) du support (40, 41 ; 42) est réalisée de manière plane et est respectivement disposée dans une zone périphérique du support (40 ; 41, 42),
dans lequel chaque patte de contact réalisée de manière plane (60, 65, 70, 75) est disposée de manière à ce que chaque surface latérale la plus grande de celle-ci s'étende respectivement perpendiculairement à un plan d'enroulement de la partie électrochimique (30), dans lequel chaque patte de contact réalisée de manière plane (60, 65) de la partie électrochimique (30) comporte une surface latérale la plus grande qui recouvre une surface latérale la plus grande d'une patte de contact (70, 75) qui doit lui être directement connectée et réalisée de manière plane du support (40 ; 41 ; 42).

2. Élément de batterie (10) selon la revendication 1, **caractérisé en ce que** l'au moins une partie formant circuit (80, 90 ; 81, 82, 91, 92, 100) comprend au moins un interrupteur de puissance (80, 90 ; 81, 82, 91, 92) et/ou au moins un autre composant électronique (100), dans lequel l'au moins un interrupteur de puissance (80, 90 ; 81, 82, 91, 92) est conçu pour connecter respectivement une électrode (61, 66) des électrodes (61, 66) à une autre électrode (61, 66) des électrodes (61, 66) et/ou l'au moins un interrupteur de puissance (80, 90 ; 81, 82, 91, 92) est conçu pour connecter respectivement une électrode (61, 66) des électrodes (61, 66) à une borne d'élément de batterie (50, 51) des bornes d'éléments de batterie (50, 51).

3. Élément de batterie (10) selon l'une des revendications précédentes, **caractérisé en ce que** l'au moins une partie formant circuit (80, 90 ; 81, 82, 91, 92, 100) est directement connectée à la première patte de contact (70) du support (40 ; 41 ; 42) et/ou à la deuxième patte de contact (75) du support (40 ; 41 ; 42), ou **en ce que** l'au moins une partie formant circuit (80, 90 ; 81, 82, 91, 92, 100) est directement connectée à la première patte de contact (70) du support (40 ; 41 ; 42) et/ou connectée à la zone conductrice du récipient.

4. Élément de batterie (10) selon l'une des revendications précédentes, **caractérisé en ce qu'**une première borne d'élément de batterie (50) des bornes d'éléments de batterie (50, 51) ou une première borne de contact (55) du support (40 ; 41 ; 42), qui est connectée à la première borne d'élément de batterie (50) ou qui forme la première borne d'élément de batterie (50), peut être connectée par l'intermédiaire d'au moins un premier interrupteur de puissance (80 ; 81, 82) de l'au moins une partie formant circuit (80, 90 ; 81, 82, 91, 92, 100) respectivement à la première patte de contact (70) du support (40 ; 41 ; 42) et/ou par l'intermédiaire d'au moins un deuxième interrupteur de puissance (90 ; 91, 92) de l'au moins une partie formant circuit (80, 90 ; 81, 82, 91, 92, 100) respectivement à la deuxième patte de contact (75) du support (40 ; 41 ; 42) ou à la zone conductrice du récipient, dans lequel une deuxième borne d'élément de batterie (51) des bornes d'éléments de batterie (50, 51) ou une deuxième borne de contact (56) du support (40 ; 41 ; 42), qui est connectée à la deuxième borne d'élément de batterie (51) ou qui forme la deuxième borne d'élément de batterie (51), est connectée à la deuxième borne de contact (75) du support (40 ; 41 ; 42) ou à la zone conductrice du récipient.

5. Élément de batterie (10) selon la revendication 4, **caractérisé en ce que** l'au moins un premier interrupteur de puissance (80 ; 81, 82) et/ou l'au moins un deuxième interrupteur de puissance (90 ; 91, 92) sont respectivement disposés sur le support (40 ; 41 ; 42) sur un côté de la patte de contact (70, 75) du support (40 ; 41 ; 42), qui doit être connectée à l'interrupteur de puissance (80, 90 ; 81, 82, 91, 92) correspondant et qui est tournée vers l'autre patte de contact (70, 75) du support (40 ; 41 ; 42), et sont respectivement adjacents au moins en partie à la patte de contact (70, 75) du support (40 ; 41 ; 42), qui doit être connectée à l'interrupteur de puissance (80, 90 ; 81, 82, 91, 92) correspondant, dans lequel les deux pattes de contact (70 ; 75) sont disposées parallèlement l'une à l'autre sur le support (40 ; 41 ; 42).

6. Élément de batterie (10) selon l'une des revendications 4 ou 5, **caractérisé en ce que** la première borne de contact (55) est disposée sur le support (40) dans une première zone qui est immédiatement adjacente à chaque patte de contact (70, 75) du support (40) et qui ne s'étend pas entre les deux pattes de contact (70, 75) du support (40), dans lequel l'au moins un premier interrupteur de puissance (80) et/ou l'au moins un deuxième interrupteur de puissance (90) sont respectivement disposés sur le support (40) sur un côté prédéfini de la première borne de contact (55) et sont adjacents à une surface latérale prédéfinie de la première borne de contact (55).

7. Élément de batterie selon l'une des revendications 4 ou 5, **caractérisé en ce que** la première borne de contact (55) est disposée sur le support (41) dans une deuxième zone s'étendant entre les deux pattes de contact (70, 75) du support (41), dans lequel l'au moins un premier interrupteur de puissance (81, 82) est respectivement disposé sur le support (41) entre la première borne de contact (55) et la première patte de contact (70) du support (41) et/ou l'au moins un deuxième interrupteur de puissance (91, 92) est respectivement disposé entre la première borne de contact (55) et la deuxième patte de contact (75) du support (41), dans lequel l'au moins un premier interrupteur de puissance (81, 82) et/ou l'au moins un deuxième interrupteur de puissance (91, 92) sont respectivement adjacents à une surface latérale de la première borne de contact (55).

8. Élément de batterie selon l'une des revendications 4 ou 5, **caractérisé en ce que** l'au moins un premier interrupteur de puissance (80) et/ou l'au moins un deuxième interrupteur de puissance (90) sont respectivement disposés dans une troisième zone du support (42) qui est directement adjacente ou qui chevauche au moins en partie la zone prédéfinie, dans lequel la zone prédéfinie s'étend immédiatement en-dessous de la première borne d'élément de batterie (50) ou de la première borne de contact (55) par rapport à une direction prédéfinie (R1) qui s'étend depuis la première borne d'élément de batterie (50) ou depuis la première borne de contact (55) vers un intérieur du récipient.

9. Élément de batterie (10) selon l'une des revendications 5 à 8, **caractérisé en ce que** la deuxième borne de contact (56) est disposée sur le support (40 ; 41 ; 42) sur un côté de la deuxième patte de contact (75) du support (40 ; 41 ; 42) qui est tourné vers la première patte de contact (70) du support (40 ; 41 ; 42), et est adjacente au moins en partie à la deuxième patte de contact (75) du support (40 ; 41 ; 42).

10. Élément de batterie (10) selon l'une des revendications 4 à 9, **caractérisée en ce que** les bornes d'éléments de batterie (50, 51) et le support (40 ; 41 ; 42) sont prévus de telle sorte qu'une surface latérale d'au moins une borne d'élément de batterie (50, 51) chevauche respectivement une surface latérale de la borne de contact (55, 56) devant y être connectée.

11. Élément de batterie (10) selon l'une des revendications précédentes, **caractérisée en ce que** le support (40 ; 41 ; 42) est réalisé de manière plane et est disposé dans le boîtier d'élément de batterie de manière à ce que chaque surface latérale la plus grande s'étende parallèlement à un plan d'enroulement de la partie électrochimique (30).

12. Élément de batterie (10) selon l'une des revendications précédentes, **caractérisée en ce que** le boîtier d'élément de batterie comprend un couvercle (20) destiné à recouvrir le récipient, dans lequel la partie électrochimique (30) est disposée dans le récipient de manière à ce qu'un plan d'enroulement de la partie électrochimique (30) s'étende parallèlement au couvercle (20), et **en ce que** le support (40 ; 41 ; 42) est disposé entre le couvercle (20) et la partie électrochimique (30) ou est intégré au couvercle (20).

13. Procédé de fabrication d'un élément de batterie (10) selon l'une des revendications précédentes.
